# EUROPÄISCHE PATENTSCHRIFT

(11) **EP 1 656 403 B1**
(45) Veröffentlichungstag und Bekanntmachung des Hinweises auf die Patenterteilung: **14.02.2007**
(21) Anmeldenummer: 04740958.6
(22) Anmeldetag: 13.07.2004
(51) Int. Cl.: C08F 283/00, C09D 151/08, C09D 167/08, C08F 8/14

(54) **WASSERVERDÜNNBARE ALKYDHARZE, VERFAHREN ZUR HERSTELLUNG UND ANWENDUNG**
WATER-DILUTABLE ALKYD RESINS, METHOD FOR THE PRODUCTION AND THE UTILIZATION THEREOF
RESINES ALKYDES POUVANT ETRE DILUEES A L'EAU, PROCEDE DE FABRICATION ET UTILISATION

(30) Priorität: 23.07.2003 AT 11612003
(43) Veröffentlichungstag der Anmeldung: 17.05.2006
(73) Patentinhaber: Cytec Surface Specialties Austria GmbH, 8402 Werndorf (AT)
(72) Erfinder: BILLIANI, Johann, A-8042 Graz (AT); REIDLINGER, Gerhard, A-8010 Graz (AT); GOBEC, Michael, A-8010 Graz (AT); ZRIN, Ewald, A-8055 Graz (AT)
(74) Vertreter: Deckers, Hellmuth Alexander
(86) Internationale Anmeldenummer: PCT/EP2004/007720
(87) Internationale Veröffentlichungsnummer: WO 2005/012376

(56) Entgegenhaltungen:
- EP-A- 0 295 403
- EP-A- 0 555 903
- EP-A- 0 608 020
- AT-B- 400 719
- US-B1- 6 576 717

## Beschreibung

Die Erfindung betrifft wasserverdünnbare Alkydharze. Sie betrifft ebenfalls ein Verfahren zu deren Herstellung und deren Verwendung insbesondere zur Formulierung von hochglänzenden Decklacken.

Aus der AT-B 400 719 ist ein Verfahren bekannt, nach dem wasserverdünnbare Alkydharze in einem zweistufigen Prozeß hergestellt werden, wobei zunächst ein Copolymer aus Vinylmonomeren und einem Massenanteil von 25 bis 50 % ungesättigten Fettsäuren hergestellt wird. Dies Copolymer wird in einem anschließenden Schritt mit weiteren ungesättigten Fettsäuren, Polyolen und niedermolekularen Dicarbonsäuren zu einem Alkydharz verestert, das sich in Wasser emulgieren läßt.

Diese so hergestellten Alkydharze sind in ihrem Glanz noch verbesserungsbedürftig. Ebenso ergeben sich Probleme bei der Verwendung dieser Alkydharze bei der Formulierung von Lacken dadurch, daß bereits gestrichene Flächen zu schnell antrocknen, wobei das Anschließen der benachbarten Lackschicht erschwert wird.

Es besteht daher die Aufgabe, ein wasserlösliches Alkydharz bereitzustellen, das weniger schnell antrocknet und einen besseren Glanz in den daraus hergestellten Lackfilmen zeigt.

Die Erfindung betrifft wasserverdünnbare Alkydharze ABC enthaltend Bausteine abgeleitet von ungesättigten Fettsäuren C, die über Estergruppen an Pfropfpolymerisate von Vinylmonomeren B auf Alkydharze A gebunden sind. Unter "Vinylmonomeren" werden hier und im folgenden olefinisch ungesättigte Monomere verstanden, die mit Styrol oder Methylmethacrylat in einer radikalisch initiierten Polymerisation copolymerisierbar sind.

Die Erfindung betrifft weiter ein Verfahren zur Herstellung von wasserverdünnbaren Alkydharzen ABC, wobei zunächst im ersten Schritt ein Alkydharz **A** durch Polykondensation von Dicarbonsäuren **A1,** aliphatischen Monocarbonsäuren **A2** mit 2 bis 40 Kohlenstoffatomen, aliphatischen linearen, verzweigten oder cyclischen Alkoholen **A3** mit mindestens zwei Hydroxylgruppen, sowie gegebenenfalls aliphatischen Mono- oder Diepoxiden **A4** hergestellt wird, das anschließend im zweiten Schritt mit ungesättigten Fettsäuren **B2** vermischt wird, und die so erhaltene Mischung im dritten Schritt mit Vinylmonomeren **B** ausgewählt aus Carboxylgruppen enthaltenden Vinylmonomeren **B1,** hydrophilen Vinylmonomeren **B4** und weiteren Vinylmonomeren **B3** ohne Hydroxyl- oder Carboxylgruppen unter Bedingungen für radikalische Polymerisation umgesetzt wird, wobei Pfropfpolymerisate der Vinylmonomeren **B1, B3** und **B4** mit den Alkydharzen **A** und den Fettsäuren **B2** gebildet werden, die mit weiteren ungesättigten Fettsäuren **C** unter Kondensationsbedingungen und unter Wasserabspaltung zumindest teilweise miteinander verestert werden, wobei die Fettsäuren C bevorzugt mindestens zwei olefinische Doppelbindungen enthalten, und diese in einer besonders bevorzugten Ausführungsform konjugiert sind.

Die Erfindung betrifft schließlich die Verwendung der erfindungsgemäßen wasserverdünnbaren Alkydharze ABC zur Herstellung von Lacken mit verbessertem Glanz.

Die Alkydharze **A** weisen Bausteine auf von Dicarbonsäuren **A1**, aliphatischen Monocarbonsäuren **A2** mit 2 bis 40 Kohlenstoffatomen, aliphatischen linearen, verzweigten oder cyclischen Alkoholen **A3** mit mindestens zwei Hydroxylgruppen, sowie gegebenenfalls aliphatischen Di- oder Monoepoxiden **A4**. Ihre zahlenmittlere molare Masse Mₙ beträgt bevorzugt 1000 g/mol bis 5000 g/mol, und die gewichtsmittlere molare Masse ca. 2000 g/mol bis ca. 12000 g/mol. Ihre Säurezahl ist bevorzugt 0 mg/g bis 20 mg/g, besonders bevorzugt 1 mg/g bis 10 mg/g und ihre Hydroxylzahl 50 mg/g bis 150 mg/g.

Dabei sind die Dicarbonsäuren A1 ausgewählt aus gesättigten oder ungesättigten linearen, verzweigten und cyclischen aliphatischen Dicarbonsäuren mit 2 bis 40 Kohlenstoffatomen und aus aromatischen Dicarbonsäuren mit 8 bis 20 Kohlenstoffatomen, oder aus deren Anhydriden, soweit sie existieren. Bevorzugt werden Malonsäure, Bernsteinsäure, Maleinsäure, Adipinsäure, 1,2-, 1,3-und 1,4-Cyclohexandicarbonsäure, dimerisierte Fettsäuren und deren Gemische, Phthalsäure, Terephthalsäure, Isophthalsäure und Tetrahydrophthalsäure sowie die Anhydride der genannten Säuren, soweit sie existieren.

Geeignete aliphatische Monocarbonsäuren **A2** sind lineare und verzweigte aliphatische Monocarbonsäuren, die gegebenenfalls mindestens eine Doppelbindung enthalten, wie Acrylsäure, Methacrylsäure, und die höheren ungesättigten Säuren wie Myristinsäure, Palmitoleinsäure, Petroselinsäure, Petroselaidinsäure, Ölsäure, Elaidinsäure, Linolsäure, Linolensäure, alpha- und beta-Eleostearinsäure, Gadoleinsäure, Arachidonsäure, Erucasäure und Clupanodonsäure, gesättigte Fettsäuren wie Capronsäure, Caprinsäure, 2-Äthylhexansäure, Laurinsäure, Myristinsäure, Palmitinsäure, Stearinsäure, Arachidinsäure, Behensäure und Lignocerinsäure, jeweils einzeln oder in Mischung, insbesondere in den natürlich vorkommenden Mischungen wie Leinölfettsäure, Tallölfettsäure, Juvandolfettsäure oder den aus nativen Fetten und Ölen beispielsweise durch Verseifen und Isomerisieren gewonnenen Fettsäuremischungen wie Conjuvandolfettsäure.

Geeignete aliphatische Alkohole **A3** sind di- und polyfunktionelle aliphatische lineare, verzweigte und cyclische Alkohole mit 2 bis 20 Kohlenstoffatomen wie z. B. Äthylenglykol, 1,2-Propylenglykol, 1,4-Butandiol, 1,6-Hexandiol, Neopentylglykol, Glycerin, Trimethylolpropan, Pentaerythrit, Ditrimethylolpropan und Dipentaerythrit. Ebenso geeignet sind Formale von drei- oder mehrwertigen Alkoholen wie Trimethylolpropanmonoformal oder Pentaerythritmonoformal.

Die gegebenenfalls mit eingesetzten aliphatischen Mono- oder Diepoxide **A4** sind bevorzugt Ester des Glycidylalkohols oder Äther des Glycidylalkohols mit Monocarbonsäuren bzw. einwertigen Alkoholen mit 5 bis 15 Kohlenstoffatomen sowie Ester des Glycidylalkohols mit Dicarbonsäuren oder Äther mit Diphenolen oder Dialkoholen wie Adipinsäure, Bernsteinsäure, Bisphenol A oder Bisphenol F oder Butandiol, Hexandiol oder Cyclohexandimethanol.

Die Vinylmonomeren B sind ausgewählt aus Carboxylgruppen enthaltenden Vinylmonomeren **B1**, ungesättigten Fettsäuren **B2,** hydrophilen Vinylmonomeren **B4** mit Oligo- oder Polyalkylenglykol-Strukturen, wobei C₂- und C₃-Alkylengruppen und deren Gemische bevorzugt sind, und weiteren Vinylmonomeren **B3** ohne Hydroxyl- oder Carboxylgruppen.

Als Vinylmonomere **B1** sind geeignet die olefinisch ungesättigten Monocarbonsäuren, insbesondere Acryl- und Methacrylsäure. Geeignete ungesättigte Fettsäuren **B2** sind die oben unter **A2** genannten, und geeignete Vinylmonomere **B3** ohne funktionelle Gruppen außer der olefinisch ungesättigten Gruppe sind insbesondere Styrol, Vinyltoluol, die Alkylester der Acryl- oder Methacrylsäure wie Methyl-, Äthyl-, Butyl oder 2-Äthylhexyl(meth)acrylat, Vinylacetat und der Vinylester der Versaticsäure. Geeignete Monomere **B4** sind insbesondere Äther von olefinisch ungesättigten Alkoholen wie besonders der des Allylalkohols mit Monoalkoxy-oligo- oder -polyäthylenglykol oder Monoalkoxy-oligo- oder -polypropylenglykol oder den Monoalkoxyderivaten von gemischten Oligo- oder Polyglykolen enthaltend C₂- und C₃-Alkylenbausteine sowie den Halbestern dieser Monoalkoxyglykole mit olefinisch ungesättigten Carbonsäuren wie Acryl- und Methacrylsäure. Dabei beträgt der Polymerisationsgrad der Oligo- oder Polyalkylenglykole bevorzugt 2 bis 20, wobei die Anzahl der Oxyäthylengruppen und die Anzahl der Oxypropylengruppen pro Molekül jeweils für sich bevorzugt 0 bis 10 beträgt.

Die ungesättigten Fettsäuren **C** haben 6 bis 40 Kohlenstoffatome und bevorzugt mindestens zwei olefinische Doppelbindungen, die in einer bevorzugten Weise so angeordnet sind, daß mindestens zwei Doppelbindungen miteinander konjugiert sind. Geeignete Fettsäuren **C** sind insbesondere die durch Isomerisieren aus Sonnenblumenölfettsäure oder Sojaölfettsäure gewonnenen Gemische, wie Conjuvandolfettsäure, sowie die isomeren Eleostearinsäuren.

Das erfindungsgemäße Verfahren zur Herstellung von wasserverdünnbaren Alkydharzen umfaßt im ersten Schritt die Herstellung eines Alkydharzes **A** durch Polykondensation von Dicarbonsäuren **A1,** aliphatischen Monocarbonsäuren **A2** mit 2 bis 40 Kohlenstoffatomen, aliphatischen linearen, verzweigten oder cyclischen Alkoholen **A3** mit mindestens zwei Hydroxylgruppen, sowie gegebenenfalls aliphatischen Di- oder Monoepoxiden **A4**. Dabei werden die Edukte **A1** bis **A3** vorgelegt und gegebenenfalls unter Zusatz von Veresterungskatalysatoren auf Basis von organischen Verbindungen von Übergangsmetallen oder Metallen der vierten Hauptgruppe des Periodensystems unter Entfernung des Reaktionswassers kondensiert. Soweit dabei Säuren im stöchiometrischem Überschuß eingesetzt werden, kann durch Zusatz von aliphatischen Mono- oder Diepoxidverbindungen **A4** die Zahl der freien Carboxylgruppen und damit die Säurezahl verringert werden.

Im zweiten Schritt werden die so hergestellten Alkydharze A mit ungesättigten Fettsäuren **B2** vermischt.

Diese Mischung wird anschließend im dritten Schritt mit den weiteren Vinylmonomeren ausgewählt aus Carboxylgruppen enthaltenden Vinylmonomeren **B1,** hydrophilen Vinylmonomeren **B4** und weiteren Vinylmonomeren **B3** ohne Hydroxyl- oder Carboxylgruppen unter Bedingungen für radikalische Polymerisation umgesetzt, wobei ein gepfropftes Alkydharz **AB** gebildet wird, das Carboxyl- und Hydroxylgruppen aufweist, sowie zumindestteilweise gepfropfte Fettsäuren B2B. Die Pfropfung erfolgt bevorzugt so, daß das Alkydharz **A** und die Fettsäuren **B2** in einem gegenüber Polymerisations- und Kondensationsreaktionen inerten Lösungsmittel, nämlich aromatischen oder aliphatischen Kohlenwasserstoffen wie Xylol oder Aromatengemischen, ätherartigen Lösungsmitteln wie Glykolmono- oder -diäthern oder Ketonen gelöst werden, die Vinylmonomeren zudosiert oder mit den Lösungen vermischt werden und die Pfropfung durch Zugabe von Radikalinitiatoren wie Peroxiden, Peroxysäuren oder Azoverbindungen gestartet wird. Es ist erfindungsgemäß bevorzugt, die Radikalinitiatoren in mehreren Portionen zuzufügen.

Im dritten Schritt werden die Pfropfcopolymerisate **AB** mit den zumindest teilweise gepfropften ungesättigten Fettsäuren **B2B** sowie gegebenenfalls weiteren Fettsäuren **C** verestert, wobei die Veresterung bevorzugt unter azeotroper Destillation des Reaktionswassers vorgenommen wird. Nach zumindest teilweiser Neutralisation der Säuregruppen in dem veresterten Pfropfcopolymerisat **ABC** wird es in Wasser dispergiert zu einem Festkörper-Massenanteil von bevorzugt 30 % bis 60 %.

Das entstandene Pfropfpolymerisat **ABC** hat bevorzugt eine Hydroxylzahl von 20 mg/g bis 50 mg/g und eine Säurezahl von 10 mg/g bis 70 mg/g, bevorzugt 20 mg/g bis 60 mg/g.

Die erhaltene wäßrige Dispersion kann zur Formulierung von Alkydharzlacken eingesetzt werden, die als Klarlacke beispielsweise auf Holz oder als pigmentierte Lacke auf Substraten wie Metallen oder Kunststoffen eingesetzt werden können. Die Lacke ergeben Beschichtungen mit hohem Glanz und geringer Trübung.

Die nachfolgenden Beispiele erläutern die Erfindung.

Die Säurezahl ist gemäß DIN EN ISO 3682 definiert als der Quotient derjenigen Masse *m*_{KOH} an Kaliumhydroxid, die erforderlich ist, um eine zu untersuchende Probe zu neutralisieren, und der Masse ***m*_{B}** dieser Probe (Masse des Feststoffes in der Probe bei Lösungen oder Dispersionen); ihre übliche Einheit ist "mg/g". Die Hydroxylzahl ist gemäß DIN EN ISO 4629 definiert als der Quotient derjenigen Masse ***m***_{KOH} an Kaliumhydroxid, die genausoviel Hydroxylgruppen aufweist wie eine zu untersuchende Probe, und der Masse *m*_{B} dieser Probe (Masse des Feststoffes in der Probe bei Lösungen oder Dispersionen); ihre übliche Einheit ist "mg/g". Die Jodzahl ist gemäß DIN 53 241-1 definiert als der Quotient derjenigen Masse *m*_{I} an Jod, die unter Entfärbung an die olefinischen Doppelbindungen einer zu untersuchenden Probe addiert wird, und der Masse *m*_{B} dieser Probe (Masse des Feststoffes in der Probe bei Lösungen oder Dispersionen); ihre übliche Einheit ist "g/(100 g)" oder "cg/g". Die früher so bezeichnete "Grenzviskositätszahl", nach DIN 1342, Teil 2.4, "Staudinger-Index" *J_{g}* genannt, ist der Grenzwert der Staudinger-Funktion *J*ᵥ bei abnehmender Konzentration und Schubspannung, wobei *J*ᵥ die auf die Massenkonzentration β_{B} = ***m*_{B}** / *V* des gelösten Stoffes B (mit der Masse ***m***_{B} des Stoffes im Volumen *V* der Lösung) bezogene relative Viskositätsänderung ist, also *J*ᵥ = (*η*ᵣ -1) /β_{B} . Dabei bedeutet ηᵣ - 1 die relative Viskositätsänderung, gemäß ηᵣ - 1 = (η - ηₛ) / ηₛ. Die relative Viskosität ηᵣ ist der Quotient aus der Viskosität η der untersuchten Lösung und der Viskosität ηₛ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für J verwendete Einheit ist "cm³/g" ; früher häufig "dl/g".

### Beispiele

### Beispiel 1 (Vergleich)

### 1.1 Alkydharz

In einem 3 1-Glasreaktor mit Rührer, Thermometer, Wasserabscheider und Rückflußkühler wurden 240 g Sojaöl-Fettsäure, 600 g Tallölfettsäure mit einer Jodzahl von 150 cg/g, 285 g Conjuvandol-Fettsäure (mit einem Massenanteil von ca. 50 % an konjugierten Fettsäuren), 536 g Trimethylolpropan und 462 g Hexahydrophthalsäureanhydrid vorgelegt und homogenisiert. Nach Verdrängen der Luft mit Stickstoff wurde unter ständigem Rühren auf 245 °C erhitzt. Bei dieser Temperatur wurde solange gehalten (ca. 6 Stunden), bis die Säurezahl des Gemischs auf unter 10 mg/g abgefallen war. Nach Abkühlen auf 180 °C wurden während dreißig Minuten 100 g ®Cardura E 10 (Glycidylester der Versatic-10-Säure, Resolution GmbH) zugegeben, die Reaktionstemperatur wurde eine weitere Stunde bei 180 °C gehalten. Die Säurezahl war danach unter 1 mg/g gesunken; dann wurde die Reaktion durch Kühlen auf Raumtemperatur abgebrochen. Das Harz (Staudinger-Index gemessen in Chloroform: 6,2 cm³/g) wurde durch Zusatz von Glykolmonobutyläther zu einer Lösung mit einem Festkörper-Massenanteil von 90 % verdünnt.

### 1.2 gepfropftes Alkydharz

387,7 g des Alkydharzes aus Beispiel 1.1 wurden in einen Glasreaktor mit Rührer, Tropftrichter, Thermometer und Rückflußkühler gefüllt. Unter einem Stickstoffstrom wurde auf 140 °C geheizt, dann wurde eine Mischung von 50,9 g Butylmethacrylat, 99,4 g Styrol, 47,7 g Methylmethacrylat, 43 g Methacrylsäure und 7,2 g Di-tert.-Butylperoxid innerhalb von einer Stunde gleichmäßig zudosiert. Anschließend wurde noch vier Stunden bei dieser Temperatur nachreagiert. Dann wurde auf 90°C gekühlt, eine Mischung von 20,8 g einer Lösung von Ammoniak in Wasser (Massenanteil von NH₃ ca. 25 %) und 114,6 g entsalztem Wasser wurde innerhalb von 30 Minuten unter Rühren zugefügt. Danach wurden über ca. 90 Minuten weitere 730 g Wasser zugegeben, die Temperatur fiel dabei auf ca. 40 °C ab.

### Beispiel 2

### 2.1 Alkydharz A

In einem 2 l-Glasreaktor mit Rührer, Thermometer, Wasserabscheider und Rückflußkühler wurden 240 g Sojaöl-Fettsäure, 100 g Conjuvandol-Fettsäure (mit einem Massenanteil von ca. 50 % an konjugierten Fettsäuren), 536 g Trimethylolpropan und 462 g Hexahydrophthalsäureanhydrid vorgelegt und homogenisiert. Nach Verdrängen der Luft mit Stickstoff wurde unter ständigem Rühren auf 245 °C erhitzt. Bei dieser Temperatur wurde solange gehalten (ca. 4 Stunden), bis die Säurezahl des Gemischs auf unter 10 mg/g abgefallen war. Nach Abkühlen auf 180 °C wurden während 30 Minuten 100 g ®Cardura E 10 (Glycidylester der Versatic-10-Säure, Resolution GmbH) zugegeben, die Reaktionstemperatur wurde eine weitere Stunde bei 180 °C gehalten. Die Säurezahl war danach unter 1 mg/g gesunken; dann wurde die Reaktion durch Kühlen auf Raumtemperatur abgebrochen. Das Harz wurde durch Zusatz von Xylol zu einer Lösung mit einem Festkörper-Massenanteil von 90 % verdünnt.

### 2.2 gepfropftes und verestertes Alkydharz ABC

In einen Glasreaktor mit Rührer, Tropftrichter, Rückflußkühler, Wasserabscheider und Thermometer wurden 229 g des Alkydharzes aus Beispiel 2.1 und 96 g Tallölfettsäure mit einer Jodzahl von 150 cg/g gefüllt; unter Stickstoffstrom wurde auf 140 °C geheizt. Bei dieser Temperatur wurde eine Mischung aus 50,9 g n-Butylmethacrylat, 99,4 g Styrol, 47,7 g Methylmethacrylat, 43 g Methacrylsäure und 7,2 g Di-tert.-Butylperoxid innerhalb von sechs Stunden gleichmäßig zudosiert. Die Reaktion wurde weitere vier Stunden bei dieser Temperatur fortgeführt, danach wurden 29,6 g Conjuvandolfettsäure zugefügt, es wurde auf 175 °C geheizt und das Lösungsmittel Xylol unter vermindertem Druck abdestilliert. Bei derselben Temperatur wurde weiter verestert, bis ein Staudinger-Index von 12 g/cm³ (gemessen in Chloroform) erreicht war. Anschließend wurden 57,6 g Glykolmonobutyläther zugesetzt und die Mischung wurde auf 90 °C gekühlt. Eine Mischung von 20,8 g einer Lösung von Ammoniak in Wasser (Massenanteil von NH₃ ca. 25 %) und 114,6 g entsalztem Wasser wurde innerhalb von 30 Minuten unter Rühren zugefügt. Danach wurden über ca. 90 Minuten weitere 730 g Wasser zugegeben, die Temperatur fiel dabei auf ca. 40 °C ab.

### Beispiel 3

### 3.1 Alkydharz A

In einem 21-Glasreaktor mit Rührer, Thermometer, Wasserabscheider und Rückflußkühler wurden 240 g Sojaöl-Fettsäure, 100 g Conjuvandol-Fettsäure (mit einem Massenanteil von ca. 50 % an konjugierten Fettsäuren), 536 g Trimethylolpropan und 462 g Hexahydrophthalsäureanhydrid vorgelegt und homogenisiert. Nach Verdrängen der Luft mit Stickstoff wurde unter ständigem Rühren auf 245 °C erhitzt. Bei dieser Temperatur wurde solange gehalten (ca. 4 Stunden), bis die Säurezahl des Gemischs auf unter 10 mg/g abgefallen war, dann wurde die Reaktion durch Kühlen auf Raumtemperatur abgebrochen. Das Harz wurde durch Zusatz von Xylol zu einer Lösung mit einem Festkörper-Massenanteil von 90 % verdünnt.

### 3.2 gepfropftes und verestertes Alkydharz ABC

In einen Glasreaktor mit Rührer, Tropftrichter, Rückflußkühler, Wasserabscheider und Thermometer wurden 229 g des Alkydharzes aus Beispiel 3.1 und 96 g Tallölfettsäure mit einer Jodzahl von 150 cg/g gefüllt; unter Stickstoffstrom wurde auf 140 °C geheizt. Bei dieser Temperatur wurde eine Mischung aus 50,9 g n-Butylmethacrylat, 99,4 g Styrol, 47,7 g Methylmethacrylat, 43 g Methacrylsäure und 7,2 g Di-tert.-Butylperoxid innerhalb von sechs Stunden gleichmäßig zudosiert. Die Reaktion wurde weitere vier Stunden bei dieser Temperatur fortgeführt, danach wurden 29,6 g Conjuvandolfettsäure zugefügt, es wurde auf 175 °C geheizt und das Lösungsmittel Xylol unter vermindertem Druck abdestilliert. Bei derselben Temperatur wurde weitere verestert, bis ein Staudinger-Index von 12 g/cm³ (gemessen in Chloroform) erreicht war. Anschließend wurden 57,6 g Glykolmonobutyläther zugesetzt und die Mischung wurde auf 90 °C gekühlt. Eine Mischung von 20,8 g einer Lösung von Ammoniak in Wasser (Massenanteil von NH₃ ca. 25 %) und 114,6 g entsalztem Wasser wurde innerhalb von 30 Minuten unter Rühren zugefügt. Danach wurden über ca. 90 Minuten weitere 730 g Wasser zugegeben, die Temperatur fiel dabei auf ca. 40 °C ab.

### Beispiele 4 bis 6

Die Alkydharze A der Beispiele 4.1 bis 6.1 wurden analog zu Beispiel 3 hergestellt, wobei die in der nachfolgenden Tabelle aufgeführten Ausgangsstoffe eingesetzt wurden.

**Tabelle 1 Alkydharze A (Zusammensetzung der Reaktionsmischung)**

| Beispiel | | 4.1 | 5.1 | 6.1 |
|---|---|---|---|---|
| Sojaöl-Fettsäure | g | 240 | 240 | 260 |
| Conjuvandol-Fettsäure | g | | 22 | 20 |
| Trimethylolpropan | g | 536 | 120 | |
| Pentaerythrit | g | | | 115 |
| Hexahydrophthalsäureanhydrid | g | 462 | | |
| Isophthalsäure | g | | 117 | |
| Phthalsäureanhydrid | g | | | 91 |
| Benzoesäure | g | | 60 | |
| durch Destillation abgetrenntes Wasser | g | -66,4 | -27,3 | -28,6 |
| Xylol | g | 130,5 | 134,0 | 51,0 |
| Säurezahl des Alkydharzes **A** | mg/g | 6,7 | 14,1 | 3,1 |
| Staudinger-Index des Alkydharzes **A** | cm³/g | 5,3 | 6,2 | 6,1 |

Die so hergestellten Alkydharze **A** (Lösungen mit einem Festkörper-Massenanteil von 90 g des Harzes in 100 g der Lösung) wurden anschließend mit den in der Tabelle 2 genannten Monomeren unter Bedingungen für eine radikalische Polymerisation umgesetzt. Dabei wurden die Alkydharze **A** zunächst mit einer zusätzlichen Menge einer Fettsäure **B2** gemischt, und unter einem Stickstoffschleier auf 140 °C geheizt. Dann wurde eine Mischung der angegebenen Monomeren **B** mit dem Initiator über eine Zeit von 360 min zugetropft. Nach beendeter Zugabe wurde die Temperatur noch ca. 250 Minuten gehalten, danach wurden die weiteren Fettsäuren C zugemischt, die Mischung auf ca. 175 °C aufgeheizt und das Reaktionswasser durch azeotrope Destillation abgetrennt. Dabei wurde solange verestert, bis ein Staudinger-Index des Alkydharzes **ABC** von ca. 12 cm³/g erreicht war. Anschließend wurde das Lösungsmittel Xylol durch Destillation unter vermindertem Druck entfernt, nach Abkühlen wurde durch Zusatz von Butylglykol, Neutralisationsmittel und zwei Portionen Wasser auf einen Festkörper-Massenanteil von ca. 38% eingestellt.

**Tabelle 2 Zusammensetzung der Emulsionen der kondensierten und gepfropften Alkydharze**

| Beispiel | | 4.2 | 5.2 | 6.2 |
|---|---|---|---|---|
| Alkydharz A aus Beispiel | | 4.1 | 5.1 | 6.1 |
| Masse der Alkydharzlösung (90 %) | g | 208,2 | 504,0 | 198,0 |
| Leinöl-Fettsäure | g | | 72 | |
| Tallöl-Fettsäure | g | 96 | | 71 |
| Polyäthylenglykol-Monoallyläther (®Maxemul 5010) | g | | | 3,0 |
| n-Butylmethacrylat | g | 50,9 | 53,0 | 52,0 |
| Styrol | g | 99,4 | 11,0 | 20,0 |
| Methylmethacrylat | g | 47,7 | | |
| Methacrylsäure | g | 43,0 | 36,0 | 25,0 |
| ®Bisomer PPA6S (Methacrylsäureester von Polypropylenglykol) | g | | 3,0 | |
| Di-tert.-butylperoxid | g | 7,2 | 5,0 | 7,0 |
| Conjuvandolfettsäure | g | 45,6 | | |
| Rizinenfettsäure | g | | 55 | |
| durch azeotrope Destillation abgetrenntes Wasser | g | -9,6 | -9,1 | -4,7 |
| Xylol Destillat | g | -20,8 | -151,4 | -19,8 |
| Butylglykol | g | 57,6 | 85,0 | 40,0 |
| Wasser | g | 114,6 | 716,0 | 300,0 |
| wäßrige Ammoniaklösung (25 %) | g | 20,8 | 23,0 | 17,0 |
| Säurezahl des Alkydharzes **ABC** | mg/g | 53 | 53 | 47 |
| Staudinger-Index gemessen in Chloroform | cm³/g | 11,9 | 12,1 | 13,1 |
| Festkörper-Massenanteil * | % | 38,6 | 37,2 | 38,0 |
| dynamische Viskosität der Lösung | mPa·s | 530 | 4500 | 2500 |
| pH-Wert (10 %ige Lösung in Wasser) | | 8,7 | 7,0 | 8,6 |
| Anteil des Polymerisats B im Alkydharz **ABC** | % | 42 | 18 | 27 |
| Säurezahl, bezogen auf die Masse des Polymerisats **B** | mg/g | 113 | 219 | 152 |
| Massenanteil der Fettsäuren im Alkydharz **ABC** | % | 34 | 30 | 54 |

| | | | | |
|---|---|---|---|---|
| *Festkörper-Massenanteil gemessen über den Trockenrückstand gemäß DIN 55 671 | | | | |

Aus den Alkydharz-Dispersionen gemäß den Beispielen 1 bis 4 wurden Lacke hergestellt nach den folgenden Rezepten:

**Tabelle 3 Lackrezepturen**

| wasserverdünnbares Alkydharz aus Beispiel | | 1 | 2 | 3 | 4 |
|---|---|---|---|---|---|
| Masse der Dispersion | g | 68,2 | 67,4 | 68,2 | 68,4 |
| Verdicker (®Optiflo H 600)ⁿ | g | 0,5 | 0,5 | 0,5 | 0,5 |
| Sikkativkombination (Kobalt ®Aqua 7)^{b} | g | 0,2 | 0,2 | 0,2 | 0,2 |
| Antihautmittel (Butanonoxim) | g | 0,3 | 0,3 | 0,3 | 0,3 |
| Pigmentpaste ^{c} | g | 29,4 | 29,4 | 29,4 | 29,4 |
| voll entsalztes Wasser | g | 7 | 12 | 12 | 12 |
| dynamische Viskosität (10⁴ s⁻¹, 23 °C) | mPa·s | 115 | 95 | 100 | 90 |
| pH-Wert (DIN ISO 976) | | 8,8 | 8,8 | 8,8 | 8,8 |
| klebfrei nach | min | 30 | 30 | 30 | 60 |
| Durchtrocknung nach 24 Stunden^{d} | | 20 | 20 | 20 | 20 |
| Glanz 20° (BYK Gardner) | | 18 | 86 | 87 | 89 |
| Glanz 60° (nach DIN 67 530) | | 61 | 92 | 94 | 96 |
| Schleier (BYK Gardner, ASTM E 430) | | 103 | 21 | 30 | 24 |

| | | | | | |
|---|---|---|---|---|---|
| a Süd-Chemie AG, Moosburg b Borchers GmbH, Monheim c Pigmentpaste: Zusammensetzung siehe Tabelle 4 d Durchtrocknung: wird bestimmt, indem 24 Stunden nach Auftragen des Lacks auf eine Glasplatte eine Kratzprobe mit dem Fingernagel vorgenommen wird; "10" bedeutet "kein Angriff' = gut; "50" bedeutet "Film schmierig, läßt sich ohne weiteres von der Platte entfernen" = schlecht | | | | | |

## Patentansprüche

1. Wasserverdünnbare Alkydharze **ABC** enthaltend ungesättigte Fettsäuren **C,** die über Estergruppen an Hydroxylgruppen enthaltende Pfropfcopolymerisate **AB** gebunden sind, wobei diese Pfropfcopolymerisate **AB** durch Pfropfen einer Mischung von Vinylmonomeren **B** auf Alkydharze A erhältlich sind.

2. Wasserverdünnbare Alkydharze **ABC** nach Anspruch 1, **dadurch gekennzeichnet, daß** der Massenanteil der Fettsäuren **C** an den Alkydharzen **ABC** von 20 % bis 60 % beträgt.

3. Wasserverdünnbare Alkydharze **ABC** nach Anspruch 1, **dadurch gekennzeichnet, daß** die Mischung der Vinylmonomeren B einen Massenanteil von 8 % bis 30 % an Carboxylgruppen enthaltenden Monomeren **B1** enthält.

4. Wasserverdünnbare Alkydharze **ABC** nach Anspruch 1, **dadurch gekennzeichnet, daß** bezogen auf die Masse der Mischung der Vinylmonomeren **B** ein Massenanteil von 10 % bis 60 % an ungesättigten Fettsäuren **B2** enthalten ist.

5. Wasserverdünnbare Alkydharze **ABC** nach Anspruch 1, **dadurch gekennzeichnet, daß** in der Mischung der Vinylmonomeren ein Massenanteil von 0 bis 10 % von olefinisch ungesättigten Verbindungen **B4** enthalten ist, ausgewählt aus Äthern von olefinisch ungesättigten Alkoholen mit Monoalkoxy-oligo- oder -polyäthylenglykol oder Monoalkoxy-oligo- oder -polypropylenglykol oder den Monoalkoxyderivaten von gemischten Oligo- oder Polyglykolen enthaltend C₂- und C₃-Alkylenbausteine sowie den Halbestern dieser Monoalkoxyglykole mit olefinisch ungesättigten Carbonsäuren.

6. Wasserverdünnbare Alkydharze **ABC** nach Anspruch 1, **dadurch gekennzeichnet, daß** sie eine Hydroxylzahl von 5 mg/g bis 150 mg/g und einen Staudinger-Index von 8 cm³/g bis 15 cm³/g, gemessen in Chloroform, aufweisen.

7. Verfahren zur Herstellung von wasserverdünnbaren Alkydharzen **ABC** nach Anspruch 1 umfassend die Schritte
Polykondensation von Dicarbonsäuren **A1,** aliphatischen Monocarbonsäuren **A2**, aliphatischen linearen, verzweigten oder cyclischen Alkoholen **A3** mit mindestens zwei Hydroxylgruppen, sowie gegebenenfalls aliphatischen Di- oder Monoepoxiden **A4**, zu Alkydharzen **A**
Zumischen von ungesättigten Fettsäuren **B2**
Pfropfen der Mischung der Alkydharze **A** und der Fettsäuren **B2** mit einer Mischung von Vinylmonomeren **B** umfassend Carboxylgruppen enthaltende Vinylmonomere **B1** und Vinylmonomere **B3,** die weder Hydroxylgruppen noch Säuregruppen enthalten, in Gegenwart von Radikalinitiatoren zu einem Carboxylgruppen enthaltenden Pfropfcopolymerisat **AB**,
Kondensation des Pfropfcopolymerisats **AB** mit ungesättigten Fettsäuren **C** unter Veresterungsbedingungen zu einem wasserverdünnbaren Alkydharz **ABC.**

8. Verfahren nach Anspruch 7, **dadurch gekennzeichnet, daß** in der Mischung der Vinylmonomeren zusätzlich olefinisch ungesättigte Monomere **B4** gemäß Anspruch 5 enthalten sind.

9. Anwendung der wasserverdünnbaren Alkydharze **ABC** gemäß Anspruch 1 zur Formulierung von Lacken, umfassend die Schritte Neutralisieren der Alkydharze **ABC,** wobei 30 % bis zu 100 % der Säuregruppen der Alkydharze **ABC** neutralisiert werden, und Emulgieren der neutralisierten Alkydharze **ABC** in Wasser.

10. Anwendung nach Anspruch 9 zur Formulierung von pigmentierten Lacken, **dadurch gekennzeichnet, daß** die Pigmente vor der Neutralisation in den Alkydharzen **ABC** dispergiert werden.

## Claims

1. Water-dilutable alkyd resins **ABC** containing unsaturated fatty acids **C** bonded via ester groups to graft copolymers **AB** containing hydroxyl groups, said graft copolymers **AB** being obtainable by grafting a mixture of vinyl monomers **B** onto alkyd resins **A**.

2. Water-dilutable alkyd resins **ABC** according to claim 1, **characterized in that** the mass fraction of fatty acids **C** in the alkyd resins **ABC** is 20% to 60%.

3. Water-dilutable alkyd resins **ABC** according to claim 1, **characterized in that** the mixture of vinyl monomers **B** contains a mass fraction of 8% to 30% of monomers **B1** containing carboxyl groups.

4. Water-dilutable alkyd resins **ABC** according to claim 1, **characterized in that** the mixture of vinyl monomers **B** contains a mass fraction of 10% to 60% of unsaturated fatty acids **B2**, based on the mass of the mixture of vinyl monomers **B.**

5. Water-dilutable alkyd resins **ABC** according to claim 1, **characterized in that** the mixture of vinyl monomers contains a mass fraction of 0 to 10% of olefinically unsaturated compounds **B4** selected from ethers of olefinically unsaturated alcohols with monoalkoxyoligoethylene or monoalkoxypolyethylene glycol or monoalkoxyoligopropylene or monoalkoxypolypropylene glycol or monoalkoxy derivatives of mixed oligoglycols or polyglycols containing C₂- and C₃-alkylene structural units, as well as half-esters of these monoalkoxy glycols with olefinically unsaturated carboxylic acids.

6. Water-dilutable alkyd resins **ABC** according to claim 1, **characterized in that** they have a hydroxyl number of 5 mg/g to 150 mg/g and a Staudinger index of 8 cm³/g to 15 cm³/g, measured in chloroform.

7. Process for the preparation of water-dilutable alkyd resins **ABC** according to claim 1, comprising the following steps:
polycondensation of dicarboxylic acids **A1,** aliphatic monocarboxylic acids **A2**, linear, branched or cyclic aliphatic alcohols **A3** having at least two hydroxyl groups, and optionally aliphatic diepoxides or monoepoxides **A4** to give alkyd resins **A**,
admixing of unsaturated fatty acids **B2**,
grafting of the mixture of alkyd resins **A** and fatty acids **B2** with a mixture of vinyl monomers **B** comprising vinyl monomers **B1** containing carboxyl groups and vinyl monomers **B3** containing neither hydroxyl groups nor acid groups, in the presence of free radical initiators, to give a graft copolymer **AB** containing carboxyl groups, and
condensation of the graft copolymer **AB** with unsaturated fatty acids **C** under esterification conditions to give a water-dilutable alkyd resin **ABC.**

8. Process according to claim 7, **characterized in that** the mixture of vinyl monomers additionally contains olefinically unsaturated monomers **B4** according to claim 5.

9. Use of the water-dilutable alkyd resins **ABC** according to claim 1 for the formulation of lacquers, comprising the following steps: neutralization of the alkyd resins **ABC,** 30% up to 100% of the acid groups of the alkyd resins **ABC** being neutralized, and emulsification of the neutralized alkyd resins **ABC** in water.

10. Use according to claim 9 for the formulation of pigmented lacquers, **characterized in that** the pigments are dispersed in the alkyd resins **ABC** before neutralization.

## Revendications

1. Résines alkyde **ABC** diluables à l'eau, contenant des acides gras insaturés **C** qui sont reliés par des groupes ester à des copolymères greffés **AB** contenant des groupes hydroxy, ces copolymères greffés **AB** pouvant être obtenus par greffage d'un mélange de monomères vinyliques **B** sur des résines alkyde **A**.

2. Résines alkyde **ABC** diluables à l'eau selon la revendication 1, **caractérisées en ce que** la proportion en masse des acides gras **C** dans les résines alkyde **ABC** va de 20 % à 60 %.

3. Résines alkyde **ABC** diluables à l'eau selon la revendication 1, **caractérisées en ce que** le mélange des monomères vinyliques **B** contient une proportion en masse de 8 % à 30 % de monomères **B1** contenant des groupes carboxy.

4. Résines alkyde **ABC** diluables à l'eau selon la revendication 1, **caractérisées en ce qu'**elles contiennent une proportion en masse de 10 % à 60 % d'acides gras insaturés **B2,** par rapport à la masse du mélange des monomères vinyliques **B.**

5. Résines alkyde **ABC** diluables à l'eau selon la revendication 1, **caractérisées en ce que** le mélange des monomères vinyliques contient une proportion en masse de 0 à 10 % de composés à insaturation oléfinique **B4**, choisis parmi des éthers d'alcools à insaturation oléfinique avec un monoalcoxy-oligo- ou -polyéthylèneglycol ou monoalcoxy-oligo- ou -polypropylèneglycol ou les dérivés monoalcoxy d'oligo- ou polyglycols mixtes contenant des composants alkylène en C₂ et C₃, ainsi que les hémiesters de ces monoalcoxyglycols avec des acides carboxyliques à insaturation oléfinique.

6. Résines alkyde **ABC** diluables à l'eau selon la revendication 1, **caractérisées en ce qu'**elles présentent un indice de groupes hydroxy de 5 mg/g à 150 mg/g et un indice de Staudinger de 8 cm³/g à 15 cm³/g, mesuré dans du chloroforme.

7. Procédé pour la préparation de résines alkyde ABC diluables à l'eau selon la revendication 1, comprenant les étapes suivantes
polycondensation d'acides dicarboxyliques **A1,** d'acides monocarboxyliques aliphatiques **A2**, d'alcools aliphatiques linéaires, ramifiés ou cycliques **A3** comportant au moins deux groupes hydroxy, ainsi qu'éventuellement de di- ou monoépoxydes aliphatiques **A4**, en résines alkyde **A**
addition d'acides gras insaturés **B2**
greffage du mélange des résines alkyde **A** et des acides gras **B2** avec un mélange de monomères vinyliques **B** comprenant des monomères vinyliques **B1** contenant des groupes carboxy et des monomères vinyliques **B3** qui ne contiennent ni groupes hydroxy, ni groupes acides, en présence d'initiateurs radicalaires, pour l'obtention d'un copolymère greffé **AB** contenant des groupes carboxy,
condensation du copolymère greffé **AB** avec des acides gras insaturés **C**, dans des conditions d'estérification, pour l'obtention d'une résine alkyde **ABC** diluable à l'eau.

8. Procédé selon la revendication 7, **caractérisé en ce que** des monomères **B4** à insaturation oléfinique selon la revendication 5 sont en outre contenus dans le mélange des monomères vinyliques.

9. Utilisation des résines alkyde **ABC** diluables à l'eau selon la revendication 1, pour la formulation de peintures, comprenant les étapes de neutralisation des résines alkyde ABC, de sorte que 30 % à 100 % des groupes acides des résines alkyde **ABC** sont neutralisés, et d'émulsification des résines alkyde **ABC** neutralisées dans de l'eau.

10. Utilisation selon la revendication 9, pour la formulation de peintures pigmentées, **caractérisée en ce que** les pigments sont dispersés dans les résines alkyde **ABC** avant la neutralisation.
